# EUROPEAN PATENT SPECIFICATION

(11) **EP 1 226 097 B1**
(45) Date of publication and mention of the grant of the patent: **12.09.2007**
(21) Application number: 00966353.5
(22) Date of filing: 13.10.2000
(51) Int. Cl.: C03C 1/02, C04B 28/02, C04B 28/06, C01B 33/24, C01B 33/26, C01B 33/20

(54) **SYNTHETIC SILICATE PELLET COMPOSITION AND METHODS OF MAKING AND USING THEREOF**
SYNTHETISCHE SILIKATPELLETZUSAMMENSETZUNG, VERFAHREN ZU DESSEN HERSTELUNG UND DESSEN ANWENDUNG
COMPOSITION D'UNE PASTILLE EN SILICATE DE SYNTHESE ET PROCEDES DE FABRICATION ET D'UTILISATION ASSOCIES

(43) Date of publication of application: 31.07.2002
(73) Proprietor: MINERALS TECHNOLOGIES INC., New York, New York 10174 (US)
(72) Inventor: HOCKMAN, John, Albert, Bath, PA 18014 (US); TOMAINO, Gary, Peter, Easton PA 18040 (US)
(74) Representative: Bawden, Peter Charles
(86) International application number: PCT/IB2000/001469
(87) International publication number: WO 2002/030841

(56) References cited:
- EP-A- 0 826 630
- WO-A-99/33765
- DE-A- 19 600 299
- GB-A- 1 303 414
- US-A- 4 028 131
- US-A- 4 031 175
- US-A- 4 358 304
- PATENT ABSTRACTS OF JAPAN vol. 013, no. 487 (C-649), 6 November 1989 (1989-11-06) & JP 01 192743 A (NIPPON STEEL CHEM CO LTD), 2 August 1989 (1989-08-02)
- DATABASE WPI Section Ch, Week 197439 Derwent Publications Ltd., London, GB; Class F01, AN 1974-68404V XP002160862 & JP 49 009515 A (KAWAI KYOSUKE), 28 January 1974 (1974-01-28)

## Description

### TECHNICAL FIELD

The present invention relates generally to glass-making, and, more particularly, to an economical method of making a synthetic calcium/magnesium silicate pellet having varied properties which can be controlled, such synthetic silicate pellets themselves, and to the using of such synthetic silicate pellets including a sized fraction thereof in glass-making systems.

### BACKGROUND

In general, glass-making involves the combination of precursive materials for melting and reacting together to form a desired glass composition. The volume and use of glass is such that natural resources are traditionally favored with a cost-optimal amount of beneficiation of such materials for glass-production purposes.

Some of the historical glass-making schemes involved the combining of sand (as a silica source), limestone and/or dolomite (as a calcia and/or magnesia source) and soda ash (as a sodium source) along with other materials and processing to form glass. The speed of such traditional processes are limited by several factors. Among the more critical factors are batch-free time (the time required to completely dissolve the combined materials) and the fining time (the time to remove gases from the melt which form undesired bubbles in the melt and resulting glass). Other factors involve chemical consistency and the handling problems associated with certain precursive materials, such as segregating, decrepitation, dusting and the like.

Progress has been made in the glass-making processes by the use of specially processed or beneficiated materials intended for use as glass precursive materials. In particular, a class of synthetic silicates have been developed encompassing various forms of synthetic calcium silicates, magnesium silicates and/or calcium magnesium silicates. Exemplary of such materials are *SYNSIL™* synthetic silicates. While such synthetic silicates can provide beneficial results, there continues to be a need for economically sourced precursive materials that can enhance melting and refining in the glass-making process.

We have developed an alkaliane earth synthetic silicate material useful as a precursor in the manufacture of glass. Deposits of natural alkaline earth silicates are of insufficient size, purity and consistency to meet the requirements of the glass industry. Up to this time synthetic alkaline earth silicates have been too costly to be considered as a key material in glass. The present invention creates an economic source of this material of the quality required.

Early tests in small scale glass melting furnaces using the technology of the present invention have demonstrated that the fuel required by a glass manufacturer to melt glass can be reduced by over 25%, thereby saving energy and conserving limited resources of natural gas. While the net energy savings (the energy saved in melting glass using the product of the present invention less the energy required to make such product) would not be anywhere near as great in larger scale more energy efficient furnaces; the energy mix effect (coat and gas versus gas) remains.

In addition to the direct impact on the energy required for glass melting, the present invention provides a secondary impact on energy through improved glass quality (fewer defects) which results in less cullet recycle (double melting). Recycle rates range from 18% to over 50% and represent an additional energy savings.

The use of this invention may enable the recapture of some of the high temperature heart at the glass-melting furnace to be used in the manufacture of synthetic silicates on site in accord with the present invention.

United States Patent 3926647 is concerned with the products of synthetic wollastonite and diopside which may be used in glass making. The Journal of the Canadian Society Volume 44 of 1975 Pages 43-47 describes the use of diopside in the manufacture of glass.

In applicant's WO99/33765 there is described a technology for the production of synthetic silicate pellets useable as precursive materials in a glass making process. As described therein, a mixture is made of sources for silica, calcium and magnesia. The mixture is used to create the precursive synthetic silicate pellet used in a glass making process. The pellets are beneficiated, e.g. ground down, and additional amounts of sodium and other materials are added in creating a melt used in a glass making process. In the process of WO99/33765 the mixture of synthetic silicate just described can be formed into a "green" pellet, that is, a pellet with an amount of moisture in it, which is not desired for further use. Accordingly, such pellets are first dried or are provided to a kiln for drying. Additionally, within the kiln there is a reaction that occurs which forms the final synthetic silicate material useful in the glass making process. This reacted pellet is reduced down to particulars or powder and, as described previously, the supplemental amounts of sodium and/or other materials are added in order to create the glass melt batch.

There can be problems in the handling of "green" pellets and in maintaining the integrity of such pellets in the kiln in which the drying and reaction processes occur. If the material is too green, e.g. too wet, it is subject to breakage and other disassociation in the handling process. Additionally, in the kiln itself the pellet is subjected to vigorous tumbling activity as well as high temperatures. Accordingly, if the pellet breaks or becomes friable or otherwise degrades, dusting can occur which is an environmental issue. Additionally, such smaller particulate metals may become sintered or melted to the interior surface of the kiln being used. Such agglomeration of masses can create rings in the kiln which becomes an obstruction. Additionally, the material tumbling, if not maintained in separate discreet pellets, may become sintered or melted together to form globs of melted mass which can damage or occlude the kiln furnace.

It is an objective of the present invention to provide a synthetic silicate pellet which can be handled without degradation and reacted without any adverse damage to the process and equipment. This is accomplished using a pellet which has catalytic characteristics and binder characteristics or both of such characteristics such that the handling of the pellets and the processing for the reaction of the pellets in the kiln can be performed in a manner that produces the desired final synthetic silicate without damage to either the pellets or the equipment.

### SUMMARY

An object of the present invention is to economically provide a synthetic silicate as a precursive glass-making material in a composition and form, which enhances melting and refining in the glass-making process.

Another object of the present invention is to economically provide a synthetic silicate as a precursive glass-making material in a composition and form, which reduces handling problems in the glass-making process.

These and other objectives are achieved by providing a synthetic silicate composition comprised of a calcium/magnesium silicate material of controlled formulation, an alumina silicate binder, a catalyst and silica fines. The binder and catalyst are alternatively present or both may be present, providing respectively preferred advantages of enhanced compression strengths and enhanced sintering characteristics of such synthetic silicates.

### DETAILED DESCRIPTION OF INVENTION

An embodiment of the present invention is a novel composition comprising (i) a silicate material having an empirical formula of Caₓ Mg_{y} Si_{z} O(_{x+y+2z}), wherein the values of x, y, and z are not zero and the values are such that the novel composition is suitable as a glass precursor material; and (ii) an alumina or silica based binder preferably an alumina silicate binder in an amount effective to impart a compression strength sufficient to enable a pellet formed from the novel composition to be handled at ambient temperature and sintered without substantial structural damage to said pellets and a catalyst comprising a compound selected from the group consisting of salts of lithium, sodium and potassium. This composition has use as precursive material in the glass-making process.

Other additives or elements of composition may be added with regard to the particular specific glass being produced. The manufacturer of such glass will make the adjustments to the variables of the elements of the composition so as to be suitable for his intended end glass product.

One embodiment of the present composition invention is a silicate material having an empirical formula of CaₓMg_{y}Si_{z}O_{(x+y+2z)}. The values chosen for such empirical formula are such that the composition is suitable as glass precursor material as discussed above. The ratio of z to (x + y) can be varied and selected to produce the desired glass forming material. The ratios may be the typical values for the well known calcium and/or magnesium silicates. (CaₓMg_{y}Si₂O_{6(x+y+4)}) material and the like. A diopside-type material may be a natural or synthetic diopside (Ca₁Mg₁Si₂O₆) or a compound with similar elemental proportions. For instance, the proportions of calcium to magnesium need not necessarily be one to one. In a preferred embodiment of the present invention a preferred ratio of calcium to magnesium is about one-half to about ten, more preferably about one to about two. A particularly more preferred range is a proportion of calcium to magnesium between the values of about 1.4 to about 1.7. Accordingly the present invention involves compounds with a general empirical formula of CaₓMg_{y}Si_{z}O_{(x+y+2z)}, whose relative proportions may duplicate the natural nite, diopside, material or be approximations. Other non-listed elements may be present in non-effective amounts in the compounds as trace or contaminant materials as long as such does not significantly alter the benefits of the present inventive compositions in the intended glass formation products. Throughout the specification it will also be appreciated by those in the art that the empirical values for the oxygen content may not strictly be x+y+2z, but will be sufficiently approximate to such so that the composition is able to perform as though mathematically balanced and chemically equivalent.

Preferred methods useable in making the silicate material and the pellets formed therefrom, used in the present invention are described in WO 99/33765, published 8 July 1999, and which disclosure is incorporated in its entirety herein as though fully stated. Those of skill in the art will appreciate that such use of such methods in practicing the present invention will additionally require the incorporation of the binders and catalysts described hereinafter to produce the novel compositions, methods and uses thereof.

Where the binder is an alumina based binder it is preferably an alumina silicate binder which can be any alumina silicate binder whose use permits the forming of a pellet with sufficient compression strength so as to be handled at ambient temperatures in the manufacturing process and then sintered in a kiln, furnace or other heating apparatus. Throughout this specification the "pellet" form can be of any structure or shape such as an amorphous glob, a sphere, a bead, a brickette, a cube, a wafer, a flake or a cylinder shape and the like. For instance, when sintered in a rotary kiln, the preferred formation is a cylindrical or spherical pellet whose size and aspect ratio is suitable to minimize fines in processing. A sufficient amount of the alumina silicate binder is used to substantially reduce the breakage of the pellet and the formation of powder or fines in the heating apparatus, such as those which might appear in a rotary kiln causing wall build up and kiln rings. Such formations affect the thermal profile in a heating apparatus, such as a kiln, and results subsequently in insufficient burning or sintering of the material thereby decreasing the intended yield. Accordingly, there should be a sufficient amount of binder so as to substantially reduce or prevent insufficient sintering of the pellet for the ultimate intended use. Prior to use in the glass-making process the pellet may be reduced in size to form aggregate or particulate type material (referred herein as "particles") for achieving ease or enhancement in use. Such treatment may be by crushing, rolling hammer or other similar processing known in the art for size reduction, such as that used for glass sand or other solid materials. Preferred sizes for some applications can range from 32 to 200 mesh.

The alumina based binder, preferably the alumina silicate binder comprises a form of aluminum oxide useable as a binder component. The alumina component is preferably purified or pure aluminum oxide but can comprise natural forms, such as corundum derivatives, and the like. Accordingly, the alumina silicate binder can be of or derived from any of the numerous types of clay containing various proportions of aluminum oxides and silicates and like material, such as (but not limited to) sodium aluminosilicates, sodium aluminate, zeolites and the like. The alumina silicate binder is preferably in an amount of about 0.1 to about 10 weight percent or higher based on the weight of the composition. One advantage of the use of such binder is the flexibility of using a wider range of silica material (e.g. sand sizes) so as to maximize pellet packing density with resulting enhancement of the compression strength. Such enhancement of the compressive strength is not reliant on such selection of sands in the present invention but is further enhanced thereby.

The source of the silica component of the CaₓMg_{y}Si_{z}O_{(x+y+2z)} silicate material in the present invention are those which are suitable for the intended glass use for product, such as natural sands or recycled fines from a glass-making process or other recovery. The amount of such silica source may range up to about 60 weight percent of the composition or even higher in specific applications. In a preferred embodiment the silica source are sands having a maximum size of up to about 30 mesh size.

The catalyst is used in an amount sufficient to effectively control the ion flow in a pellet formed from the composition so that the ion flow effectively forms the desired wollastonite-type, diopside-type or enstatite-type product during sintering of the pellet. The catalyst useable in the present invention is a catalyst which comprises any compound, of lithium, potassium or sodium or a combinations thereof. A preferred catalyst is selected from a group consisting of lithium carbonate, lithium hydroxide, potassium carbonate, potassium hydroxide, sodium carbonate and sodium hydroxide or combination thereof. The catalyst should be in an effective amount so as to react in a manner to cause a controlled melt, preferably one that allows an exchange of ions within the pellet from an area of high density to an area of low density. The amount of catalyst is in a range of 0.05 to about 5 weight percent dry catalyst in the composition. A preferred catalyst is sodium hydroxide in a liquid form. The catalyst is thought to act as a flux which breaks down the phases and improves reaction and flow of the material.

In yet another embodiment, the binder is silica based. In this embodiment the present invention provides a novel composition comprising (i) a silicate material having an empirical formula of CaₓMg_{y}Si_{z}O_{(x+y+2z),} wherein the values of x, y, and z are not zero and the values are such that the novel composition is suitable as a glass precursor material and silica fines in an amount effective to impart a compression strength sufficient to enable a pellet formed from the novel composition to be handled at ambient temperature and sintered without substantial structural damage to said pellet.

This composition has use as precursive material in the glass-making process. Preferred silica fines are those which pass through a screen of about 200 mesh gauge. Such silica fines are preferably about 1 to about 7 percent by weight of the novel composition, more preferably about 3 to about 5 weight percent. The amount of silica fines used is that which is effective to significantly enhance the compressive strength of a pellet formed from the composition as compared to a similar composition without silica fines. Compressive strength can be measured by those standard techniques known in the materials art. The use of an effective amount of silica fines preferably increases the compressive strength by at least about thirty percent, more preferably by about fifty percent. The alkali metal catalysts described above are also useful in systems in which silica fines are used as the binder.

Optional embodiments of the present invention include the use of the above-mentioned amounts of silica fines and either the above-mentioned catalysts or binders or both binder and catalysts. Some of the silica fines can be used as the source of silica for the CaₓMg_{y}Si_{z}O_{(x+y+2z)} material, but need not be the source.

In another aspect, an embodiment of the present invention is a process for producing a sinterable mass comprising a silicate material having an empirical formula of CaₓMg_{y}Si_{z}O_{(x+y+2z)}, wherein the values of x, y, and z y are not zero and the values are such that the composition is suitable as a glass precursor material, an alumina silicate binder and an optional amount of silica fines, the process comprises setting the relative values of x, y, and z so that the material is suitable as a glass precursor material, and setting the binder and optional silica fines proportions in the sinterable mass to enable sintering without substantial structural damage to the form.

In yet another embodiment, the present invention is a process for producing a sinterable mass comprising a silicate material having an empirical formula of CaₓMg_{y}Si_{z}O_{(x+y+2z)}, wherein the values of x, y, and z are not zero and the values are such that the composition is suitable as a glass precursor material; an ion flow catalyst and an optional amount of silica fines. The process comprises setting the relative values of x, y, and z so that the material is suitable as a glass precursor material, and setting the proportion of the catalyst in the mass to effectively produce a desired diopside-type composition during sintering of the form, and formation of the mass suitable for sintering and the optional amount of silica fines to enhance compression strength.

A preferred embodiment is a process for producing a sinterable mass comprising a silicate material having an empirical formula of CaₓMg_{y}Si_{z}O_{(x+y+2z)}, wherein the values of x, y, and z are not zero and the silicate material is suitable as a glass precursor material, an alumina silicate binder, an ion flow catalyst and an optional amount of silica fines. The process comprises setting the relative values of x, y, and z so that the material is suitable as a glass precursor material, setting the binder proportion in the sinterable mass to enable formation from the mass of a form sinterable without substantial structural damage to the form, setting the proportion of the catalyst in the mass to effectively produce a desired diopside-type composition during sintering, and formation of the mass suitable for sintering and setting the optional amount of silica fines to enhance compression strength.

In yet another embodiment, the present invention is a method of producing a molten glass using a synthetic silicate precursor which reduces handling problems and enhances the melting process to produce the molten glass. This method involves heating silica with a batch component which provides the major portion of sodium in the resultant molten glass and which provides the synthetic silicate, as described hereinabove, having the desired amounts of magnesium and calcium components.

The synthetic silicate is advantageous similar particle size and distribution to the primary glass-making precursive material (e.g. sand) which minimizes potential segregation of precursive materials. In addition, unlike limestone, a dolomite, the synthetic silicate is not as subject to decrepitation during heating. Further, the synthetic silicates are not (less) friable so as to create dust during batching or other handling during the glass-making processes. Accordingly, a preferred method is forming a synthetic silicate pellet in accordance with one of the inventive embodiments described hereinabove and combining such with the necessary amounts of silica and sodium to form a desired molten glass and heating such material to form such molten glass. The sources of silica and sodium can be those typical in the glass industry and the glass batching procedure of a type typically used in glass melting processes.

Accordingly, one embodiment of the present invention is a process for producing a molten glass comprising heating silica with a batch component comprising a source of sodium and a synthetic silicate comprising a silicate material according to claim 1, and silica fines in an amount such that the composition is suitable as a glass precursor material.

In yet a more preferred embodiment, the present invention is a process for producing a molten glass comprising heating silica with a batch component comprising a source of sodium and a synthetic silicate pellet comprising a silicate material having an empirical formula of CaₓMg_{y}Si_{z}O_{(x+y+2z)}, wherein the values of x, y, and z are not zero and the values are such that the composition is suitable after sizing as a glass precursor material; an alumina silicate binder in an amount effective to impart a compression strength sufficient to enable a pellet formed from the composition to be handled at ambient temperature and sintered without substantial structured damage to the pellet; a catalyst comprising a compound selected from the group consisting of lithium, potassium and sodium. The catalyst being provided in an amount sufficient to effectively control the ion flow in a pellet formed from the composition so that the ion flow effectively forms the desired wollastonite-type, diopside-type, or enstatite-type formation during sintering of the pellet; and silica fines in an amount such that the composition is suitable after sizing as a glass precursor material. The preferred values for x and y are as stated hereinabove as well as the preferred aluminum silicate binders and catalysts.

The present invention therefore enables improved glass making in a preferred process in which
i. Sources of calcium and/or magnesium silicates are mixed together with the binder and the catalyst
ii. The mixtures are pelletized in the present of water to form "green" pellets
iii. The pellets are dried
iv. The pellets are fired in a kiln whereby they are given sufficient strength for subsequent handling and are converted into the optimum form and composition for use in subsequent glass making, the pellets being substantially free of carbonate ions.
v. The pellets are then mixed with a sodium source and a silica source and heated to produce molten glass.

The material chosen and the proportions used will depend upon the nature of the finished glass to be produced. However, whatever the process considerable energy savings are obtained due to the absence of carbonate ions, which reduce bubble formation in the glass making process due to the formation of CO₂. This in turn leads to a shorter time being needed for glass making and energy savings. The amount of glass that needs to be rejected is also reduced.

In all the above embodiments, an optional amount of silica fines to increase pellet compression strength can be used.

The following examples are illustrative of the present invention but do not limit the scope thereof.

The following terms are described to assist in the understanding of the experiments, but are not to limit the scope of the invention herein.
Muffle Furnace - Laboratory scale furnace in which temperature can be adjusted in order to simulate the heat of a rotary kiln. Used for measuring pellet strength at various temperatures.
Rotary Kiln - A refractory lined cylinder, usually inclined, which rotates and can be heated. In this application it provides for commercial scale calcination of the pellets.
Compression Tester - The tester consists of a platform that has a piston positioned above it. The piston is slowly lowered at a fixed velocity until it comes into contact with the pellet and the pellet breaks apart. The instrument provides the pounds of force required to break the pellet.
Attrition Tester - A 3 foot by 6-inch cylinder that rotates end to end. The amount of breakage of pellets at hot temperatures can be determined and the tester simulates a rotary kiln.
Glass Sand - A low iron sand of the size used by the glass industry for providing the source of silicon dioxide (silica, or α-quartz type materials, for examples).
Blender/Mixer Hydration Test - This test is to determine the degree of hydration of CaO in a blender or mixer. This test utilizes a moisture balance, platinum crucible, analytical balance and lab furnace. Before performing this test the amount of CaO and MgO in the original lime sample must be determined (EDTA titration is the easiest way to determine this). Also, the lime/sand ratio used in the blender or mixer must be known. A sample from the blender or mixer is placed the moisture balance to drive off all free moisture and dry weight recorded. The material is placed into the crucible and heated to 600 C for thirty (30) minutes. The material is reweighed and placed back into the furnace at 950 C for thirty (30) minutes. The calcined material is reweighed. Using these weights and the information about the lime/sand samples, degree of hydration can be determined.
Pellets - Mixing and hydrating the dolomitic lime and calcium oxide with silica to generate a mixture that is rolled into "pellets" and dried. Pellets are roughly one half inch in diameter.
Soak - Dwell times at a certain temperature that a pellet is subjected to in the furnace or kiln.
Cold Compression Strength Test - Used to determine the strength of dried pellets at ambient temperature.
Hot Compression Strength Test - Used the evaluate the compression strength of pellets over a set thermal profile. The same tester is used to measure hot compression strength as cold compression strength.
Pellet Attrition Test - This simulates the dynamics of a rotary kiln to test for breakage and production of fines of standard pellets. Representative pellets are selected and placed in a lab furnace at a desired temperature for thirty (30) minutes. Remove the pellets and allow to cool enough for handling. Two hundred fifty (250) grams of pellets (larger than 6 mesh) are weighed out and carefully poured into the attrition tube (described above). Rotation speed is set at one revolution per minute for thirty (30) minutes. At the end of the rotation cycle, the contents are emptied from the attrition tube onto a 6-mesh sieve and lightly shaken to pass the fines through the sieve. The material that did not filter through the sieve is then weighed to determine the amount of fines that were lost through the sieve.
Sintering - Pellets are passed through a muffle furnace or rotary kiln in which a temperature profile is followed to produce a desired product.
Kiln Ring - A powder or fines build-up on the wall of the kiln. This causes changes in the thermal profile of the kiln thus reducing efficiency.
"Secar 71" - Brand of calcium aluminate cement produced by La Farge Cement. This is a fast setting cement that is advertised as 30% calcium and 70% aluminate.

### Binder Additive for Pelletization:

Example 1 and Example 2 illustrates the increase in pellet strength when a binder is added during pellet formation. After the components of the formulation are mixed together, the material is then "rolled" into one half inch diameter pellets. Compression and attrition testing is done as described below.

### Example 1

### Control Batch

Seventy-two (72) pounds of pebble lime and seventy-seven (77) pounds of sand are placed in a blender. Three (3) pounds of sodium hydroxide is dissolved in thirty-six (36) pounds of water. This solution is added to the blender at a rate of 1.1 pounds per minute until hydration is complete. After the completion of water addition continue to mix for two (2) minutes. This material is then formed into one half inch in diameter pellets and air-dried for twenty-four (24) hours.

### Six Percent Calcium Aluminate and Fumed Silica Binder

Forty-seven (47) pounds of pebble lime, forty-seven pounds of sand, and six (6) pounds of fume silica are placed in a blender. Two (2) pounds of sodium hydroxide is dissolved in twenty-three (23) pounds of water. This solution is added to the lime, sand, and silica mixture at 1.1 pounds per minute until hydration is complete. After completion of water addition, six (6) pounds of Secar 71 cement is added to the blender and blending is continued for two (2) minutes. This material is the formed into one half inch in diameter pellets and air-dried for twenty-four (24) hours.

Twenty-one representative pellets are selected from each of the formulations above. Individual pellets are placed on the tester and evaluated as outlined above. An average of the results is given in TABLE 1.

| TABLE 1 | | | | | | | | |
|---|---|---|---|---|---|---|---|---|
| Compression Strength Test (pounds) | | | | | | | | |
| Temperature | Ambient Temp. | 500°C | 600°C | 700°C | 800°C | 900°C | 1000°C | 1100°C |
| Control | 34.3 | 56.4 | 34 | 17.1 | 12 | 3 | 1 | N/A |
| 6% Secar 71 | 61.7 | 71.6 | 31.8 | 18.0 | 20.0 | 17.6 | 25.4 | 18.8 |

### Example 2

An attrition test, as described above, is done on the pellets produced through the processes described in Example 1. An attrition test is done as described above, to determine the amount of fines produced by the dynamic motion of a rotary kiln. In this test the mixture with no binder is compared with the mixture in which six (6) percent of Secar 71 cement is added.

After thirty (30) minutes in the attrition tester the control pellets had sixty seven and one half (67.5) percent fines while the pellets with six (6) percent binder had only fifteen and one tenth (15.1) percent fines. This correlates to over a seventy-seven (77) percent increase in usable product when using a binder.

### Effect of a Catalyst on Producing Desired Product

### Example 3 (a reference example)

In this example, six hundred (600) grams of pulverized dolomitic lime (contains 56.06% CaO and 38.31% MgO) is mixed with seven hundred thirty one (731) grams of silica in a blender. Seven hundred thirty (730) grams of water are added and mixed three (3) minutes. This gives a material that is formed into one *half-inch* cubes and dried overnight at 110°C. A second mixture is made according to this procedure except that one (1) percent, by dry wt., NaOH is dissolved in the water and this solution is added to the lime/silica mix. The results are shown in TABLE 2.

| TABLE 2 | | |
|---|---|---|
| Catalyst Effect of NaOH | | |
| | "Control Experiment" 1350°C - 45 minutes No NaOH | 1350°C - 45 minutes With NaOH |
| Substance | % Crystalline Phase | % Crystalline Phase |
| Diopside | 2-4 | 51-68 |
| ∝-Quartz | 45-60 | 7-10 |
| Cristobalite | 2-4 | 2-4 |
| Akermanite | 2-4 | 10-15 |
| Merwinite | 2-4 | 2-4 |
| Lime | 2-4 | None detected <0.5 |
| Periclase | 10-15 | 2-4 |
| Υ-Ca₂SiO₄ | 7-10 | None detected <1.0 |
| Larnite, Ca₂SiO₄ | 2-4 | None detected <1.0 |
| Cyclowollastonite, CaSiO₃ | 2-4 | None detected < 1.0 |
| onticellite, CaMgSiO₄ | None detected < 0.5 | 4-7 |
| Amorphous Phase (glass-SiO₂, Ca/Mg silicate) | < 5 | <5 |

### Example 4

Commercial scale trials were performed using conditions that would normally produce 2.8 tons of finished glass in 23½ hours. Using the techniques of the present invention 3.16 tons on finished glass were produced in 18 hours.

In a second standard overnight run 1.58 tons of glass were produced in 12 hours using the techniques of the present invention as opposed to the conventional 1.1 tons in 13½ hours.

## Claims

1. A composition comprising a bound silicate material prepared by sintering from sources of silica, calcium and magnesium and having an empirical formula of CaₓMg_{y}Si_{z}O_{(x+y+2z)} wherein the values of x, y and z are not zero and the ratio of calcium to magnesium is one-half to ten and said values are such that said composition is suitable as a glass precursor material and containing 0.1 to 10 weight percent of the composition of an alumina or silica based binder whereby the composition can withstand a compression strength sufficient to enable a pellet formed from said composition to be handled at ambient temperature and sintered without substantial structural damage to said pellet and the sintering is performed in the presence of from 0.05 to 5 weight percent of a catalyst comprising a compound selected from the group consisting of salts of lithium, potassium and sodium.

2. The composition of Claim 1 wherein the ratio is one to two.

3. The composition of Claim 1 or Claim 2 wherein the catalyst comprises one or more compounds selected from the group consisting of lithium carbonate, lithium hydroxide, sodium carbonate and sodium hydroxide.

4. A process for producing molten glass comprising heating silica with a batch component comprising a source of sodium and a sized bound synthetic silicate comprising a silicate material having an empirical formula of CaₓMg_{y}Si_{z}O_{(x,y+2z)} wherein the values of x, y and z are not zero and the ratio of calcium to magnesium is one-half to ten and said values are such that said composition is suitable as a glass precursor material in which the synthetic silicate material was prepared by sintering sources of silica, calcium and magnesium in the presence of 0.1 to 10 weight percent of the composition of an alumina or silica based binder and 0.05 to 5 weight percent of a catalyst comprising a compound selected from the group consisting of salts of lithium, potassium and sodium and wherein the synthetic silicate is bound with the silica or alumina based binder in an amount effective to impart compression strength sufficient to enable a pellet formed from said composition to be handled at ambient temperature and sintered without substantial structured damage to said pellet.

5. A process for making glass comprising a process according to Claim 4 comprising
i) mixing sources of calcium and magnesium silicates with 0.1 to 10 weight percent of an alumina or silica based binder and 0.05 to 5 weight percent of a catalyst comprising a compound selected from the group consisting of salts of lithium, potassium and sodium;
ii) pelletizing the mixture in the presence of water to form "green" pellets;
iii) drying the pellets;
iv) firing the pellets in a kiln so they are bound and are substantially free of carbonate ions;
v) mixing the fired pellets with a sodium source and a silica source and heating the mixture to produce molten glass.

## Patentansprüche

1. Zusammensetzung mit einem gebundenen Silikatmaterial, welches durch Sintern aus Siliziumdioxid, Calcium und Magnesium hergestellt worden ist und eine empirische Formel CaₓMg_{y}Si_{z}O_{(x+y+2z)} aufweist, worin die Werte von x, y und z nicht null sind und das Verhältnis von Calcium zu Magnesium ½ bis 10 beträgt und die Werte derart sind, dass die Zusammensetzung als Glasvormaterial geeignet ist, und 0,1 bis 10 Gewichtsprozent der Zusammensetzung eines Bindemittels auf der Basis von Aluminiumdioxid oder Siliziumdioxid enthält, wodurch die Zusammensetzung eine Druckfestigkeit aufweist, die ausreicht, dass ein aus der Zusammensetzung geformtes Pellet bei Umgebungstemperatur gehandhabt werden und gesintert werden kann, ohne dass eine wesentliche strukturelle Schädigung an dem Pellet eintritt und wobei die Sinterung in Anwesenheit von 0,05 bis 5 Gewichtsprozent eines Katalysators stattfindet, der eine Verbindung aus der Gruppe der Salze von Lithium, Kalium und Natrium umfasst.

2. Zusammensetzung nach Anspruch 1, bei der das Verhältnis 1:2 beträgt.

3. Zusammensetzung nach Anspruch 1 oder 2, bei der der Katalysator eine oder mehrere Verbindungen aus der Gruppe Lithiumcarbonat, Lithiumhydroxid, Natriumkarbonat und Natriumhydroxid umfasst.

4. Verfahren zur Herstellung geschmolzenen Glases, welches die Aufheizung von Siliziumdioxid mit einer Ansatzkomponente umfasst, die eine Natriumquelle und ein klassiertes synthetisches Silikat umfasst, welches ein Silikatmaterial der empirischen Formel CaₓMg_{y}Si_{z}O_{(x+y+2z)} umfasst, worin die Werte von x, y und z nicht null und das Verhältnis von Calcium zu Magnesium ½ zu 10 ist und die Werte so gewählt sind, dass die Zusammensetzung als Glasvormaterial geeignet ist, wobei das synthetische Silikatmaterial durch Sintern von Siliziumdioxid, Calcium und Magnesium in Gegenwart von 0,1 bis 10 Gewichtsprozent der Zusammensetzung eines Bindemittels auf Aluminiumoxid- oder Siliziumoxyd-Basis und 0,05 bis 5 Gewichtsprozent eines Katalysators hergestellt werden, ist, der eine Verbindung aus der Gruppe der Salze von Lithium, Kalium und Natrium umfasst und worin das synthetische Silikat mit dem Bindemittel auf Siliziumoxid- oder Aluminiumoxidbasis in einer Menge gebunden ist, um eine Druckfestigkeit zu verleihen, die ausreicht, dass ein aus der Zusammensetzung geformtes Pellet bei Umgebungstemperatur gehandhabt werden und gesintert werden kann, ohne dass ein wesentlicher struktureller Schaden an dem Pellet eintritt.

5. Verfahren zur Glasherstellung, umfassend ein Verfahren nach Anspruch 4 mit folgenden Verfahrensschritten:
i) es werden Quellen von Calcium- und Magnesiumsilikaten mit 0,1 bis 10 Gewichtsprozent eines Bindemittels auf der Basis von Aluminiumdioxid oder Siliziumdioxid und 0,05 bis 5 Gewichtsprozent eines Katalysators gemischt, der eine Verbindung aus der Gruppe der Salze von Lithium, Kalium und Natrium enthält;
ii) die Mischung wird in Gegenwart von Wasser pelletisiert, um "grüne" Pellets zu bilden;
iii) die Pellets werden getrocknet;
iv) es werden die Pellets in einem Ofen geglüht, so dass sie gebunden und im wesentlichen frei von Carbonationen sind;
v) es werden die geglühten Pellets mit einer Natriumquelle und einer Quelle von Siliziumdioxid vermischt und es wird die Mischung zur Herstellung von geschmolzenem Glas erhitzt.

## Revendications

1. Composition comprenant un silicate lié préparé par frittage de sources de silice, de calcium et de magnésium et ayant pour formule empirique CaₓMg_{y}Si_{z}O_{(x+y+2z)}, dans laquelle les valeurs de x, y et z ne sont pas égales à zéro et le rapport du calcium au magnésium est de un demi à dix et lesdites valeurs sont telles que ladite composition convient comme matière précurseur de verre, et contenant 0,1 à 10 %, en poids de la composition, d'un liant à base d'alumine ou de silice, la composition pouvant ainsi supporter une résistance à la compression suffisante pour permettre à un granule formé à partir de ladite composition d'être manipulé à température ambiante et fritté sans détérioration structurale ou substantielle dudit granule, et le frittage est effectué en présence de 0,05 à 5 % en poids d'un catalyseur comprenant un composé choisi dans le groupe consistant en des sels de lithium, de potassium et de sodium.

2. Composition suivant la revendication 1, dans laquelle le rapport est de un à deux.

3. Composition suivant la revendication 1 ou la revendication 2, dans laquelle le catalyseur comprend un ou plusieurs composés choisis dans le groupe consistant en carbonate de lithium, hydroxyde de lithium, carbonate de sodium et hydroxyde de sodium.

4. Procédé pour la production de verre fondu, comprenant le chauffage de silice avec un constituant de mélange comprenant une source de sodium et un silicate synthétique lié calibré comprenant un silicate répondant à la formule empirique CaₓMg_{y}Si_{z}O(x+y+2z), dans laquelle les valeurs de x, y et z ne sont pas égales à zéro et le rapport du calcium au magnésium va de un demi à dix et lesdites valeurs sont telles que ladite composition convient comme matière précurseur de verre, dans lequel le silicate synthétique a été préparé en frittant des sources de silice, de calcium et de magnésium en présence de 0,1 à 10 %, en poids de la composition, d'un liant à base d'alumine ou de silice et de 0,05 à 5 % en poids d'un catalyseur comprenant un composé choisi dans le groupe consistant en des sels de lithium, de potassium et de sodium, et dans lequel le silicate synthétique est lié avec le liant à base de silice ou d'alumine en une quantité efficace pour conférer une résistance à la compression suffisante pour permettre à un granule formé à partir de ladite composition d'être manipulé à température ambiante et fritté sans détérioration structurale substantielle dudit granule.

5. Procédé pour la production de verre, comprenant un procédé suivant la revendication 4, comprenant les étapes consistant à :
i) mélanger des sources de silicates de calcium et de magnésium avec 0,1 à 10 % en poids d'un liant à base d'alumine ou de silice et 0,05 à 5 % en poids d'un catalyseur comprenant un composé choisi dans le groupe consistant en des sels de lithium, de potassium et de sodium ;
ii) granuler le mélange en granules pour former des granules "crus" ;
(iii) sécher les granules;
(iv) cuire les granules dans un four de telle sorte qu'ils soient liés et qu'ils soient pratiquement dépourvus d'ions carbonate ;
(v) mélanger les granules cuits avec une source de sodium et une source de silice et chauffer le mélange pour produire du verre fondu.
